Europäisches Patentamt

European Patent Office

Office européen des brevets

(19)

(11) Veröffentlichungsnummer: **0 294 536**
**B1**

(12) # EUROPÄISCHE PATENTSCHRIFT

(45) Veröffentlichungstag der Patentschrift:
04.04.90

(21) Anmeldenummer: 87890130.5

(22) Anmeldetag: 11.06.87

(51) Int. Cl.⁴: **B23C 5/26**, B23B 31/26

(54) **Spannvorrichtung zum Befestigen eines scheibenförmigen Messerkopfes an einem Werkzeugträger.**

(43) Veröffentlichungstag der Anmeldung:
14.12.88 Patentblatt 88/50

(45) Bekanntmachung des Hinweises auf die Patenterteilung:
04.04.90 Patentblatt 90/14

(84) Benannte Vertragsstaaten:
AT DE FR GB IT SE

(56) Entgegenhaltungen:
EP-A- 0 208 786
DE-A- 2 936 639
DE-A- 3 436 733
DE-C- 513 250
US-A- 1 472 565
US-A- 2 912 904

(73) Patentinhaber: GFM Gesellschaft für Fertigungstechnik und Maschinenbau Gesellschaft m.b.H.,
Ennserstrasse 14, A-4403 Steyr(AT)

(72) Erfinder: Kirchberger, Peter, Dipl.-Ing., Schulgasse 3,
A-3350 Haag(AT)
Erfinder: Blaimschein, Gottfried, Dipl.-Ing.,
Arnhalmweg 33, A-4407 Steyr(AT)

(74) Vertreter: Hübscher, Helmut, Dipl.-Ing. et al,
Patentanwälte Dipl.-Ing. Gerhard Hübscher Dipl.-Ing. Helmut Hübscher Dipl.-Ing. Heiner Hübscher
Spittelwiese 7, A-4020 Linz(AT)

## Beschreibung

Die Erfindung bezieht sich auf eine Spannvorrichtung zum Befestigen eines scheibenförmigen Messerkopfes an einem dreh- und antreibbaren Werkzeugträger, wobei der Messerkopf eine einer planen Trägerstirnfläche zugeordnete plane Anlagefläche aufweist und über wenigstens ein axial wirkendes Spannglied und ein Spannelement mit dem Träger verspannbar ist, welches Spannelement einen Kegelsitz für den Messerkopf bildet und sich unter elastischer Verformung über einen Zylindersitz am Träger abstützt.

Messerköpfe von Werkzeugmaschinen zur spannenden Werkstückbearbeitung, beispielsweise außen- oder innenschneidende Fräsräder, Schleifscheiben u.dgl., müssen für eine Werkstückbearbeitung mit entsprechender Genauigkeit gegenüber dem Werkzeugträger, z.B. eine Antriebsspindel oder eine Werkzeugtrommel, radial und axial ausgerichtet sein, so daß die Messerkopfbefestigung gleichzeitig zu einer Justierung des Messerkopfes führen soll. Um daher sowohl ein axiales als auch ein radiales Ausrichten zu gewährleisten, ist es, wie aus der US-A 1 472 565 oder der EP-A1 0 208 786 hervorgeht, bereits bekannt, den Messerkopf nicht direkt, sondern unter Einsatz eigener Spannelemente mit dem Träger zu verspannen, welche Spannelemente eine spielfreie Justierung des Messerkopfes in radialer und in axialer Richtung erlauben. Die Spannelemente lassen sich nämlich relativ zum Träger axial verstellen, so daß sie bei axialer Verspannung auf Grund der durch den Kegelsitz gegebenen axialen Kraftkomponente auf den Messerkopf diesen mit seiner Anlagefläche an die zugehörige Trägerstirnfläche anlegen und exakt axial ausrichten. Nach diesem axialen Ausrichten führt dann die axiale Verspannung, bedingt durch die auf Grund des Kegelsitzes gegebene radiale Komponente, zu einer ordnungsgemäßen Zentrierung des Messerkopfes und gleichzeitig wegen der Messerkopfanlage an der Trägerstirnfläche zu einer elastischen Verformung im Zylindersitzbereich des Spannelementes, was einen spielfreien Zylindersitz zwischen Spannelement und Träger und damit die exakte radiale Ausrichtung des Messerkopfes mit sich bringt. Eine rein axiale Verspannung des Spannelementes und dessen Möglichkeit einer elastischen Verformung, die durch geeignete Wahl des Werkstoffes und/oder der konstruktiven Gestaltung erreichbar ist, garantieren eine höchsten Anforderungen genügende, justierende Messerkopfbefestigung. Allerdings ist bisher durch die Notwendigkeit, zum Abnehmen und Ansetzen der Messerköpfe alle Spannelemente und Spannglieder vollständig entfernen zu müssen, ein Messerkopfwechsel recht mühsam und zeitraubend und außerdem eignen sich die bekannten Spannvorrichtungen nur für spindelförmige Werkzeugträger.

Der Erfindung liegt daher die Aufgabe zugrunde, diese Mängel zu beseitigen und eine Spannvorrichtung der eingangs geschilderten Art zu schaffen, die bei spindel- oder trommelförmigen Werkzeugträgern einsetzbar ist, ein exaktes radiales und axiales Ausrichten des Messerkopfes dem Träger gegenüber gewährleistet und sich dabei durch ihre verhältnismäßig einfache und geschickte Handhabung auszeichnet.

Die Erfindung löst diese Aufgabe dadurch, daß als Spannelement ein Spannring vorgesehen ist und daß der Spannring und der Messerkopf regelmäßig am Umfang verteilte Klauen aufweisen, die mit ihren Rücken den Kegelsitz bilden und zwischen sich an die Klauenbreite angepaßte Lücken freilassen. Liegen sich die Klauen von Spannring und Messerkopf unmittelbar gegenüber, kann der Spannring seine justierende Funktion voll erfüllen. Werden hingegen Spannring und Messerkopf durch Relativverdrehung gegeneinander auf Lücke versetzt, gibt der Spannring den Messerkopf frei, der so, ohne den Spannring abnehmen zu müssen, von der Spindel abgezogen werden kann, da ja nun jeweils die Klauen des einen Teiles durch die Lücken des anderen passen. Beim Montieren des Messerkopfes braucht dann lediglich in umgekehrter Reihenfolge zuerst der Messerkopf aufgesteckt und durch Verdrehen und axiales Belasten des Spannringes verspannt zu werden, so daß ohne Vorhandensein von Losteilen ein schnelles, rationelles Messerkopfwechseln möglich ist.

Gibt es für außenschneidende Messerköpfe eine Antriebsspindel als Werkzeugträger und besteht das Spannglied aus einem stirnseitig am Spannring angreifenden Spannflansch, der einen in die hohle Spindel ragenden, mit einem vorzugsweise federbelasteten Spannbolzen zusammenwirkenden Nabenansatz bildet, weist günstigerweise der Nabenansatz eine schraubenlinienförmige, in einen Axialabschnitt auslaufende Führungsnut auf, in die ein radialer Führungsstift der Spindel eingreift. Es ergibt sich eine zweckmäßige Spanngliedkonstruktion, die ein Spannen des Messerkopfes vom dem Messerkopf abgewandten Spindelbereich her erlaubt. Der Spannflansch wird durch die hohle Spindel gegen den Spannring gezogen, wozu ein einfacher Spannbolzen dient. Dieser läßt sich gegenüber der Spindel verschrauben oder in vorteilhafter Weise mit entsprechenden Spannfedern belasten, wodurch ein selbsttätiges Spannen erfolgt und zum Lösen des Messerkopfes lediglich ein Aufdrücken des Spannbolzens gegen die Federbelastung notwendig ist. Durch die axiale Bewegung des Nabenansatzes mittels des Spannbolzens wird dabei aber nicht nur die Spannung gelöst, sondern gleichzeitig auf Grund des Zusammenspiels von Führungsstift und Führungsnut auch eine geeignete Drehbewegung des Spannringes zur Freigabe des Messerkopfes erreicht.

Um Spannflansch und Spannring zu einer Funktionseinheit machen zu können, ohne die Ausgleichsbewegungen des Spannringes beim Justieren zu beeinträchtigen, lassen sich Spannflansch und Spannring erfindungsgemäß mit Bewegungsspiel aneinander anlenken.

Gibt es für innenschneidende Messerköpfe eine Werkzeugtrommel als Werkzeugträger, können nach einer anderen Lösung der eingangs genannten Aufgabe als Spannelement wenigstens zwei, vorzugsweise vier Paßfedern dienen, die außenseitig den Zylindersitz und innenseitig den Kegelsitz bilden. Werden diese Paßfedern beispielsweise durch Spannbolzen axial verspannt, kommt es ebenfalls zu einer exakten Justierung und einem spielfreien Sitz des Messerkopfes, wobei hier allerdings die Befestigung nicht im Achs-, sondern im Umfangsbereich und die Zentrierung mit radial einwärts wirkenden Kraftkomponenten erfolgt.

Weisen die Paßfedern Querschlitze od. dgl. auf, wird deren elastische Verformbarkeit erleichtert und vom Werkstoff unabhängiger.

In der Zeichnung ist der Erfindungsgegenstand rein schematisch veranschaulicht, und zwar zeigen

Fig. 1 eine erfindungsgemäße Spannvorrichtung im Axialschnitt,

Fig. 2 eine Stirnansicht dieser Spannvorrichtung mit abgenommenem Deckel in größerem Maßstab und

Fig. 3 eine Ausführungsvariante der Spannvorrichtung im Axialschnitt.

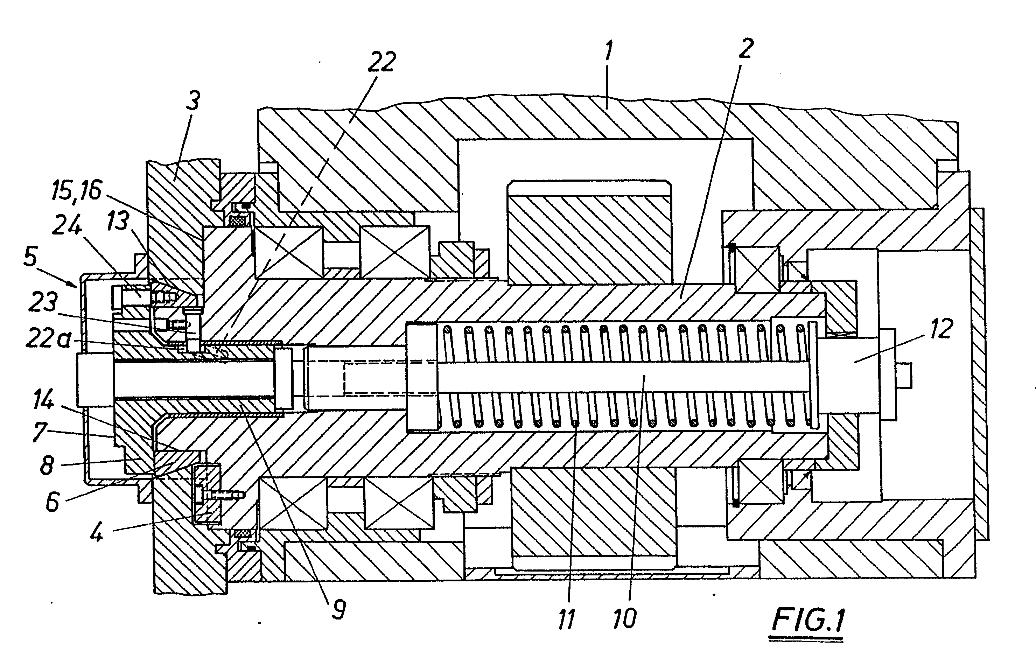

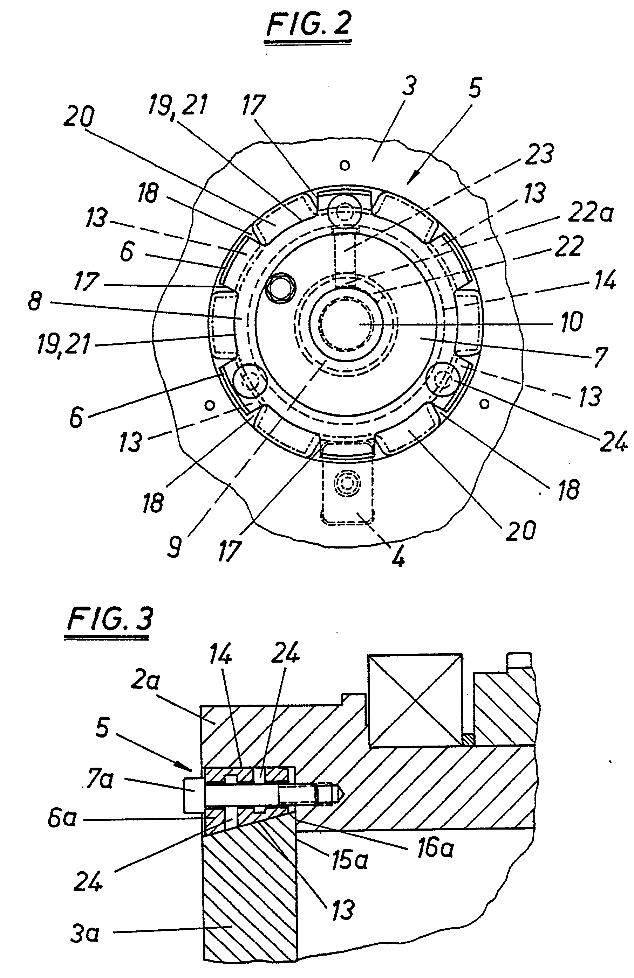

Gemäß dem Ausführungsbeispiel nach Fig. 1 und 2 ist an einer in einem Gehäuse 1 dreh- und antreibbar gelagerten hohlen Antriebsspindel 2 stirnseitig ein außenschneidender Messerkopf 3 angesetzt, wobei ein Mitnahmekeil 4 für eine drehfeste Verbindung zwischen Messerkopf 3 und Spindel 2 sorgt. Zur justierenden Befestigung des Messerkopfes 3 dient eine Spannvorrichtung 5, die einen Spannring 6 und ein axial wirkendes Spannglied 7 aufweist. Das Spannglied 7 besteht aus einem stirnseitig am Spannring 6 angreifenden Spannflansch 8, der einen in die hohle Spindel 2 vorragenden Nabenansatz 9 besitzt und mit einem Spannbolzen 10 zusammenwirkt. Der im Spannsinn über eine Spannfeder 11 belastete Spannbolzen 10 ist drehbar, aber verschiebefest mit dem Nabenansatz 9 verbunden und trägt am messerkopfabgewandten Ende der Spindel 2 einen Betätigungskopf 12 zur axialen Verschiebung gegen die Kraft der Spannfeder 11.

Der Spannring 6 bildet einerseits für den Messerkopf 3 einen Kegelsitz 12 und sützt sich anderseits über einen Zylindersitz 14 an der Spindel 2 ab, wobei durch eine elastische Verformbarkeit des Spannringes 6 ein spielfreies Zusammenwirken zwischen Messerkopf 3, Spindel 2 und Spannring 6 möglich ist. Wird der Spannring 6 über das Spannglied 7 zum Spannen des Messerkopfes 3 mit axialer Spannkraft beaufschlagt, bewegt sich der Spannring 6 unter Mitnahme des Messerkopfes 3 relativ zur Spindel 2 in Spannkraftrichtung, bis der Messerkopf 3 mit einer planen Anlagefläche 15 an einer zugehörigen planen Spindelstirnfläche 16 zur Anlage kommt und der Messerkopf 3 dadurch exakt axial positioniert ist. Auf Grund des Kegelsitzes 13 wird nun durch die axiale Spannkraft der Messerkopf 3 zentriert und radial ausgerichtet, wobei ein gleichzeitiges elastisches Verformen des Spannringes 6 zu einem spielfreien Zylindersitz 14 zwischen Spannring 6 und Spindel 2 führt. Die axiale Spannkraftbelastung gewährleistet daher eine vollkommen exakte radiale und axiale Ausrichtung des Messerkopfes 3 der Spindel 2 gegenüber.

Wie insbesondere aus Fig. 2 hervorgeht, weisen der Spannring 6 und der Messerkopf 3 regelmäßig am Umfang verteilte Klauen 17, 18 auf, die mit ihren Rükken den Kegelsitz 13 bilden und zwischen sich an die Klauenbreite angepaßte Lücken 19, 20 freilassen, wobei auch der Spannflansch 8 den Lücken 19, 20 entsprechende Ausnehmungen 21 bildet. Der Nabenansatz 9 des Spannflansches 8 ist außerdem mit einer schraubenlinienförmigen Führungsnut 22 ausgestattet, die in einen Axialabschnitt 22a ausläuft und in die ein radialer Führungsstift 23 der Spindel 2 eingreift. Da weiters der Spannring 6 und der Spannflansch 8 über geeignete Anlenkschrauben 24 zu einer Funktionseinheit zusammengefaßt sind, läßt sich die Spannvorrichtung 5 auf rationelle Weise über den Betätigungskopf 12 des Spannbolzens 10 öffnen oder schließen. Wird nämlich der Spannbolzen 10 axial im Öffnungssinn, also gegen die Kraft der Spannfeder 11 vorgeschoben, bewegt sich die Funktionseinheit aus Spannflansch 8 und Spannring 6 entsprechend dem Zusammenspiel von Führungsnut 22, 22a und Führungsstift 23 zuerst ein Stück axial zurück und verdreht sich dann relativ zur Spindel 2, so daß der Spannring 6 entlastet, vom Messerkopf 3 abgehoben und diesem gegenüber verdreht wird. Es kommt nicht nur zum Lösen der Verspannung, sondern auch zu einem Freigeben des Messerkopfes 3, da durch das Verdrehen des Spannringes 6 die Klauen 17 des Spannringes nicht mehr den Klauen 18 des Messerkopfes, sondern dessen Lücken 19 gegenüberliegen (strichpunktierte Darstellung), so daß der Messerkopf 3 über den Spannring 6 und den Spannflansch 8 hinweg abgezogen werden kann. Zum Aufsetzen des Messerkopfes 3 braucht dann in umgekehrter Reihenfolge nur der Messerkopf 3 wieder bei verdrehtem Spannring 6 unter Einhaltung der durch den Mitnehmerkeil 4 bestimmten Winkellage aufgeschoben und dann der Spannbolzen 10 wieder der Kraft der Spannfeder 11 ausgesetzt zu werden, wodurch die axiale Rückbewegung des Spannbolzens 10 und damit der Funktionseinheit aus Spannflansch 8 und Spannring 6 neben der Axialbewegung wieder zu einem Verdrehen des Spannringes 6 und zu einer funktionsgerechten Zuordnung der Klauen 17, 18 von Spannring 6 und Messerkopf 3 führt. Der Kegelsitz 13 kann genauso wie der Zylindersitz 14 voll seine Aufgaben erfüllen und der Messerkopf 3 wird exakt justierend gespannt.

Gemäß dem Ausführungsbeispiel nach Fig. 3 kann eine ähnliche justierende Spannung auch für einen innenschneidenden Messerkopf 3a erreicht werden, zu dessen Aufnahme eine dreh- und antreibbare Werkzeugtrommel 2a vorgesehen ist. Als Spannelement gibt es hier Paßfedern 6a, die außenseitig mit einer Innenfläche der Trommel 2a den Zylindersitz 14 und innenseitig mit einerAußenfläche des Messerkopfes 3a den Kegelsitz 13 bilden. Werden diese Paßfedern 6a durch Spannschrauben 7a oder in nicht weiter dargestellter Weise ebenfalls durch federbelastete Spannbolzen axial verspannt, kommt es wiederum zu einem axialen Ausrichten des Messerkopfes 3a durch das Anlegen seiner Anlagefläche 15a an der zugehörigen Trommelstirnfläche 16a und zu einem radialen Ausrichten wegen des Kegelsitzes 13 und der spielfreien Abstützung über den Zylindersitz 14, wobei Querschlitze 24 die elastische Verformung der Paßfedern 6a bei der spielfreien Abstützung an der Werkzeugtrommel 2a erleichtern.

## Patentansprüche

1. Spannvorrichtung (5) zum Befestigen eines scheibenförmigen Messerkopfes (3) an einem dreh- und antreibbaren Werkzeugträger (2), wobei der Messerkopf (3) eine einer planen Trägerstirnfläche (16) zugeordnete plane Anlagefläche (15) aufweist und über wenigstens ein axial wirkendes Spannglied (7) und ein Spannelement (6) mit dem Träger (2) verspannbar ist, welches Spannelement (6) einen Kegelsitz (13) für den Messerkopf (3) bildet und sich unter elastischer Verformung über einen Zylindersitz (14) am Träger (2) abstützt, dadurch gekennzeichnet, daß als Spannelement ein Spannring (6) vorgesehen ist und daß der Spannring (6) und der Messerkopf (3) regelmäßig am Umfang verteilte Klauen (17, 18) aufweisen, die mit ihren Rücken den Kegelsitz (13) bilden und zwischen sich an die Klauenbreite angepaßte Lücken (19, 20) freilassen.

2. Spannvorrichtung nach Anspruch 1, mit einer Antriebsspindel (2) als Werkzeugträger, wobei das Spannglied (7) aus einem stirnseitig am Spannring (6) angreifenden Spannflansch (8) besteht, der einen in die hohle Spindel (2) ragenden, mit einem vorzugsweise. federbelasteten Spannbolzen (10) zusammenwirkenden Nabenansatz (9) bildet, dadurch gekennzeichnet, daß der Nabenansatz (9) des Spannflansches (8) eine schraubenlinienförmige, in einen Axialabschnitt (22a) auslaufende Führungsnut (22) aufweist, in die ein radialer Führungsstift (23) der Spindel (2) eingreift.

3. Spannvorrichtung nach Anspruch 2, dadurch gekennzeichnet, daß Spannflansch (8) und Spannring (6) mit Bewegungsspiel aneinander angelenkt sind.

4. Spannvorrichtung (5) zum Befestigen eines scheibenförmigen Messerkopfes (3a) an einem dreh- und antreibbaren Werkzeugträger (2a), wobei der Messerkopf (3a) eine einer planen Trägerstirnfläche (16a) zugeordnete plane Anlagefläche (15a) aufweist und über wenigstens ein axial wirkendes Spannglied (7a) und ein Spannelement (6a) mit dem Träger (2a) verspannbar ist, welches Spannelement (6a) einen Kegelsitz (13) für den Messerkopf (3a) bildet und sich unter elastischer Verformung über einen Zylindersitz (14) am Träger (2a) abstützt, dadurch gekennzeichnet, daß eine Werkzeugtrommel (2a) od.dgl. als Werkzeugträger vorgesehen ist und als Spannelement wenigstens zwei, vorzugsweise vier Paßfedern (6a) dienen, die außenseitig den Zylindersitz (14) und innenseitig den Kegelsitz (13) bilden.

5. Spannvorrichtung nach Anspruch 4, dadurch gekennzeichnet, daß die Paßfedern (6a) Querschlitze (24) od. dgl. aufweisen.

## Revendications

1. Dispositif de mise en serrage (5) pour fixer une tête de coupe (3) en forme de disque sur un porte-outil (2) entraîné en rotation et en avance, la tête de coupe (3) présentant une surface d'appui (15) plane adaptée à une surface frontale (16) plane du porte-outil et qui peut être mise en serrage avec le porte-outil (2) au moyen d'au moins un organe de serrage (7) et d'un l'élément de serrage (6), lequel élément de serrage (6) constitue un siège conique (13) pour la tête de coupe (3) et s'appuie, avec déformation élastique, sur le porte-outil (2) par l'intermédiaire d'un siège cylindrique (14), caractérisé en ce que, comme élément de serrage, on prévoit une bague de serrage (6) et en ce que la bague de serrage (6) et la tête de coupe (3) présentent, réparties d'une façon régulière sur la périphérie, des dents (17, 18) qui constituent, avec leur face arrière, le siège conique (13) et laissent libres entre eux des vides (19, 20) ajustés à la largeur des dents.

2. Dispositif suivant la revendication 1, comportant une broche d'avance (2) comme porte-outil, l'organe de serrage (7) étant constitué d'une bride de serrage (8) venant saisir, côté frontal, la bague de serrage (6), bride de serrage (8) qui forme un moyeu en saillie (9) pénétrant dans la broche creuse (2) et agissant en même temps qu'un axe de serrage (10) mis, de préférence, en tension par ressort, caractérisé en ce que le moyeu en saillie (9) de la bride de serrage (8) présente une rainure de guidage (22) hélicoïdale, disposée suivant une section axiale (22a), dans laquelle vient s'encliqueter un ergot radial de guidage (23) de la broche 2.

3. Dispositif suivant la revendication 2, caractérisé en ce que bride de serrage (8) et bague de serrage (6) sont articulées l'un avec l'autre avec un jeu de déplacement.

4. Dispositif de mise en serrage (5) pour fixer une tête de coupe (3a) en forme de disque sur un porte-outil (2a) entraîné en rotation et en avance, la tête de coupe (3a) présentant une surface d'appui (15a) plane adaptée à une surface frontale (16a) plane du porte-outil et qui peut être mise en serrage avec le porte-outil (2a) au moyen d'au moins un organe de serrage (7a) et d'un l'élément de serrage (6a), lequel élément de serrage (6a) constitue un siège conique (13) pour la tête de coupe (3a) et s'appuie avec déformation élastique, sur le porte-outil (2a) par l'intermédiaire d'un siège cylindrique (14), caractérisé en ce qu'un tambour cylindrique d'outil (2a), ou similaire, est prévu comme porte-outil et qu'au moins deux, de préférence quatre, ressorts d'ajustage (6a), formant par leur face externe le siège cylindrique (14) et, par leur face interne, le siège conique (13), servent de bague de serrage (6).

5. Dispositif suivant la revendication 4, caractérisé en ce que les ressorts d'ajustage (6a) présentent des rainures transversales (24) ou similaires.

## Claims

1. Clamping device (5) for securing a disk-shaped inserted-tooth cutter (3) to a tool carrier (2), which is rotatable and adapted to be driven and has a planar engaging surface (15), which is associated with a planar end face (16) of the carrier, and the inserted-tooth cutter is adapted to be clamped against the carrier (2) by means at least one axially acting clamping member (7) and a clamping element (6), which constitutes a conical seat (13) for the inserted-tooth cutter (3) and bears on the carrier (2) at a cylindrical seat (14) with elastic deformation, characterized in that the clamping element consists of a clamping ring (6), the clamping ring (6) and the inserted-tooth cutter (3) comprise claws (17, 18), which are regularly distributed around the periphery and have back surfaces, which constitute the conical seat (13), and between them leave gaps (19, 20), which are adapted to the width of the claws.

2. A clamping device according to claim 1, in which the tool carrier consists of a drive spindle (2) and the clamping member (7) consists of a clamping flange (8), which engages one end of the clamping ring (6) and constitutes a hub extension (9), which protrudes into the tubular spindle (2) and cooperates with a preferably spring-loaded clamping pin (10), characterized in that the hub extension (9) of the clamping flange (8) has a helical gude groove (22), which terminates in an axial portion (22a) and receives a radial guide pin (23) of the spindle (2).

3. A clamping device according to claim 2, characterized in that the clamping flange (8) and the clamping ring (6) are pivotally interconnected with a backflash.

4. A clamping device (5) for securing a disk-shaped inserted-tooth cutter (3a) to a tool carrier (2a), which is rotatable and adapted to be driven and has a planar engaging surface (15a), which is associated with a planar end face (16a) of th carrier, and the inserted-tooth cutter id adapted to be clamped to the carrier (2a) by means of at least one axially acting clamping member (7a) and a clamping element (6a), which constitutes a conical seat (13) for the inserted-tooth cutter (3a) and bears on the carrier (2a) at a cylindrical seat (14) with elastic deformation, characterized in that the tool carrier consists of a tool drum (2a) or the like and the clamping element consists of at least two and preferably four keys (6a), which on their outside constitute the cylindrical seat (14) and on their inside constitute the conical seat (13).

5. A clamping device according to claim 4, characterized in that the keys (6a) have transverse slots (24) or the like.

FIG.1

## FIG. 2

## FIG. 3